**Europäisches Patentamt**

**European Patent Office**

**Office européen des brevets**

(11) Veröffentlichungsnummer: **0 163 035**
**B1**

(12) # EUROPÄISCHE PATENTSCHRIFT

(45) Veröffentlichungstag der Patentschrift:
08.06.88

(51) Int. Cl.⁴: **B 23 B 5/28**

(21) Anmeldenummer: **85103378.7**

(22) Anmeldetag: **22.03.85**

(54) **Verfahren zum Reprofilieren von Profilen von Radsätzen.**

(30) Priorität: **10.05.84 EP 84105312**

(43) Veröffentlichungstag der Anmeldung:
**04.12.85 Patentblatt 85/49**

(45) Bekanntmachung des Hinweises auf die Patenterteilung:
**08.06.88 Patentblatt 88/23**

(84) Benannte Vertragsstaaten:
**DE FR GB IT**

(56) Entgegenhaltungen:
**DE-C-422 291**
**GB-A-1 017 493**
**US-A-1 854 672**

(73) Patentinhaber: **Wilhelm Hegenscheidt Gesellschaft mbH, Neusser Strasse 3, D-5140 Erkelenz (DE)**

(72) Erfinder: **Dombrowski, Theodor, Dipl.- Ing., Anton-Heinen- Strasse 43, D-5140 Erkelenz (DE)**
Erfinder: **Wittkopp, Helmut, Dipl.- Ing., Cusanushof 87, D-5140 Erkelenz (DE)**
Erfinder: **Klosterhalfen, Hartwig, Dipl.- Ing., Am Weinberg 7, D-5160 Düren (DE)**
Erfinder: **Kluft, Werner, Dr. Ing., Scherberger Strasse 3, D-5102 Würselen (DE)**
Erfinder: **Fabry, Jochen, Dr. Ing., Tucherstrasse 1, D-8501 Rückersdorf (DE)**
Erfinder: **Lung, Dieter, Dipl.- Ing., Postropsweg 27, D-5120 Herzogenrath (DE)**

(74) Vertreter: **Liermann, Manfred, Josef- Schregel-Strasse 19, D-5160 Düren (DE)**

EP 0 163 035 B1

## Beschreibung

Die Erfindung betrifft ein Verfahren zum Reprofilieren von Profilen von Radsätzen durch eine Drehbearbeitung. Diese Form der Reprofilierung von Profilen von Radsätzen ist seit langem bekannt und hat sich weltweit durchgesetzt. Als Schneidstoffe werden hierbei z. B. Hartmetalle verwendet, mit denen es möglich geworden ist, die Profile der Räder eines Radsatzes in recht kurzer Zeit und sehr genau zu reprofilieren.

Bei der vorbeschriebenen Drehbearbeitung entstehen jedoch nachteiligerweise überwiegend lange Fließspäne, die den Arbeitsprozeß behindern, Beschädigungen an der Maschine hervorrufen können und die ständige Aufmerksamkeit des Drehers erfordern. Darüber hinaus macht die Beseitigung der bei der Reprofilierung angefallenen Fließspäne Schwierigkeiten.

Als weitere Form einer zerspanenden Bearbeitung zur Reprofilierung der Profile von Radsätzen ist die Fräsbearbeitung dieser Profile durch umlaufende Profilfräser bekannt. Diese Form der Bearbeitung hat den Vorteil, nur kurze Späne zu erzeugen, so daß die mit Fließspänen zusammenhängenden Probleme hierdurch beseitigt sind. Allerdings ist nachteiligerweise eine solche Fräsbearbeitung zeitaufwendig, in der Regel nicht genügend genau und erzeugt eine reprofilierte Oberfläche, die nur schwer meßbar ist.

Wegen der wirtschaftlichen Nachteile hat sich daher die Fräsbearbeitung weltweit nicht in dem Umfange durchgesetzt wie die Drehbearbeitung bei der Reprofilierung der Profile von Radsätzen.

Es ist weiterhin bei der Reprofilierung von Profilen von Radsätzen durch eine Drehbearbeitung mit der DE-OS 2 713 997 bereits bekannt geworden an unterschiedlichen Profilbereichen der Räder zu reprofilierender Radsätze mit unterschiedlichen Werkzeugen zu arbeiten. Der Unterschied der Werkzeuge liegt in deren Schneidengeometrie, wobei die Veränderung der Schneidengeometrie einerseits der Anpassung an die Geometrie des Profilbereichs, der jeweils reprofiliert werden soll, dient und andererseits der Anpassung an im Gesamtprofilbereich auftretende unterschiedliche Werkstoffhärten. Im Profilbereich der Räder von Radsätzen treten Flachstellen und Hartstellen auf, die örtlich eng begrenzt sind und daher während eines Durchlaufs eine Stoßbelastung auf die eingesetzte Hartmetallschneidplatte ausüben. Solche Hartmetallschneidplatten ebenso wie auch herkömmliche Schneidstoffe können dieser Stoßbelastung widerstehen. Ebenso aber muß es möglich sein, Schweißraupen aus Reparaturschweißungen, beispielsweise im Bereich der Spurkranzflanke, zu durchschneiden. Auch dies gelingt mit den genannten Schneidstoffen. Weiterhin tritt bei einem gelaufenen Radsatz sehr häufig im Bereich der äußeren Stirnseite eines Rades ein recht großer und harter Überwalzungsgrad auf, der ebenfalls eine hohe Belastung für solche Schneidstoffe darstellt, von diesen jedoch beherrscht wird.

Es sind weiterhin Hochleistungsschneidstoffe, z. B. Oxydkeramik, bekannt, die bei einem Zerspanungsprozeß eine erheblich höhere Schnittgeschwindigkeit als Hartmetallschneidstoffe zulassen. Diese Hochleistungsschneidstoffe sind jedoch stoßempfindlich und sind daher nur bei kontinuierlichem Betrieb einsetzbar. Liegt aber ein kontinuierlicher Betrieb vor, erlauben sie gegenüber den bekannten Hartmetallschneidstoffen eheblich höhere Arbeitsgeschwindigkeiten und es wird bei Einsatz dieser Hochleistungsschneidstoffe gegenüber dem Einsatz von z. B. Hartmetallschneidstoffen eine erhebliche Zeiteinsparung erreicht. Hochleistungsschneidstoffe werden also da eingesetzt, wo eine Zeitersparnis sowie hohe Oberflächenqualität erreicht werden soll.

Bei der Reprofilierung von Profilen von Radsätzen durch eine Drehbearbeitung ist somit das Problem der Fließspäne ungelöst. Der Erfindung liegt daher die Aufgabe zugrunde, ein Verfahren der eingangs beschriebenen Art vorzuschlagen, mit dem es möglich wird, kurze Bruchspäne bei der Drehbearbeitung der gelaufenen Profile der Räder von Radsätzen zu erreichen.

Diese Aufgabe ist bei einem Verfahren der genannten Art dadurch gelöst, daß das Profil in wechselndem Einsatz von stoßunempfindlichen Schneidstoffen und solchen Schneidstoffen die eine Stoßbelastung des Schneidstoffes nicht erwarten lassen, unter Anpassung der Schnittdaten an den jeweils momentan verwendeten Schneidstoff überdreht wird, die eine für einen sicheren Spanbruch ausreichende Schnittgeschwindigkeit zulassen, wobei der letztgenannte Schneidstoff in den Profilbereichen eingesetzt wird, während in den übrigen Bereichen die stoßunempfindlichen Schneidstoffe eingesetzt werden. Durch diese kombinierte Verwendung von herkömmlichen stoßunempfindlichen Schneidstoffen und den die höhere Schnittgeschwindigkeit zulassenden Schneidstoffen, nachfolgend immer Hochleistungsschneidstoffe genannt, wie beispielsweise Oxydkeramik, gelingt es die Stärken beider Schneidstoffe miteinander zu kombinieren und gleichzeitig die Schwächen beider Schneidstoffe zu eliminieren. Der Einsatz des Hochleistungsschneidstoffes in den Profilbereichen, in denen eine Stoßbelastung nicht zu erwarten ist, die also eine relativ gleichmäßig verteilte Härte aufweisen und den Schneidstoff relativ gleichmäßig belasten, kann mit den für solche Hochleistungsschneidstoffe typischen Zerspanungsdaten zerspant werden, wodurch kurze Bruchspäne erzeugt werden können. Fließspäne können beim Einsatz solcher Hochleistungsschneidstoffe und richtiger Wahl der Schnittdaten sicher vermieden werden. Diese Hochleistungsschneidstoffe würden jedoch in den Profilbereichen in denen eine Stoßbelastung auftritt, zerstört werden. Sie werden daher in den Bereichen gegen stoßunempfindliche Schneidstoffe, z. B. gegen die bekannten Hartmetallschneidstoffe, ausgetauscht, die nun ihrerseits mit veränderten Zerspanungsdaten zum Einsatz kommen. Die Stoßbelastung kann ausgelöst werden z. Beispiel durch harte Stellen, durch Flachstellen oder auch durch Schweißraupen oder Grat. Diesen Anforderungen sind die als Beispiel genannten Hartmetallschneidstoffe gewachsen, wobei der beschriebene Werkstoffzustand in den genannten Profilbereichen gleichzeitig mindestens für relativ kurze Späne auch beim Einsatz von stoßunempfindlichen Schneidstoffen sorgt, so daß auch in diesem Bereiech mindestens relativ kurze Bruchspäne entstehen.

Nach einer bevorzugten Ausführung der Erfindung ist vorgesehen, daß das Vorhandensein von Stoßbelastungen auslösenden Stellen und deren Anordnung im Profilbereich vor oder während der Drehbearbeitung geprüft wird und in Abhängigkeit von diesem Prüfungsergebnis die Werkzeugzuordnung zu den unterschiedlichen Profilbereichen und die Auswahl und Einstellung der zuzuordnenden Schnittdaten erfolgt. Mit dieser Maßnahme gelingt es, über den gesamten Profilbereich Bruchspäne zu erzeugen durch den wechselweisen Einsatz von Hochleistungsschneidstoffen oder stoßunempfindlichen Schneidstoffen und es gelingt gleichzeitig, durch Eingrenzung des jeweiligen Profilbereichs, in dem die jeweiligen Schneidstoffe eingesetzt werden sollen, eine Arbeitsoptimierung zu erreichen.

Nach einer alternativen bevorzugten Ausführung der Erfindung ist vorgesehen, daß in den Profilbereichen, in denen nach der Erfahrung mindestens häufig Stoßbelastungen auftreten, unabhängig vom tatsächlichen Zustand dieser Profilbereiche im Einzelfall, stets stoßunempfindliche Schneidstoffe eingesetzt werden, während in den übrigen Profilbereichen stets die die höhere Schnittgeschwindigkeit zulassenden Schneidstoffe eingesetzt werden. Die in einem bestimmten Gleisnetz laufenden Radsätze weisen je nach ihrer regelmäßigen Verwendung ganz bestimmte Verschleißcharakteristika und eine ganz bestimmte Verteilung von solchen Stellen auf, die eine Stoßbelastung erzeugen, mit der der Schneidstoff belastet wird. Diese Eigenschaften sind aus der Erfahrung bekannt und können daher auch als solche einfach vorausgesetzt werden. Es kann dann eine entsprechende Prüfung des Werstoffzustandes am Radsatz entfallen.

Es ist auch noch nach einer bevorzugten Ausführung der Erfindung vorgeschlagen, daß in den unterschiedlichen Profilbereichen, die von den unterschiedlichen Schneidstoffen bearbeitet werden, die jeweils eingesetzte Schneidengeometrie und Spanleitstufe den Zerspanungsbedingungen des zu bearbeitenden Profilbereiches angepaßt ist. Hierdurch gelingt es Spanbruch, Oberflächenqualität und Zeitbedarf jeweils zu optimieren. Allerdings macht dies den Einsatz von Schneidplatten unterschiedlicher Geometrie mindestens bei den stoßunempfindlichen Schneidstoffen erforderlich, die in ihrer Schneidengeometrie jeweils an die Zerspanungssituation des Profilbereichs angepaßt sind, in dem sie zum Einsatz kornmen sollen.

Eine alternative Lösung der Aufgabe wird nach der Erfindung darin gesehen, daß die Räder der Radsätze vor der Drehbearbeitung auf das Vorhandensein von die Drehwerkzeuge stoßartig belastenden Stellen durch Messen und/oder Inaugenscheinnahme geprüft werden, wobei das Ergebnis der Prüfung für eine nachfolgende Werkzeugauswahl derart verwendet wird, daß bei Vorhandensein von die Schneidwerkzeuge stoßartig belastenden Stellen das ganze Profil mit stoßunempfindlichen Schneidstoffen und bei nicht Vorhandensein solcher Stellen das ganze Profil mit den die höhere Schnittgeschwindigkeit zulassenden Schneidstoffen unter Anwendung der jeweils zuzuordnenden spezifischen Schnittdaten bearbeitet wird. Auch hierdurch gelingt es Hochleistungsschneidstoffe wie z. B. Oxydkeramik dann zum Einsatz zu bringen, wenn die Räder der Radsätze im zu reprofilierenden Bereich keine Stellen aufweisen, die diese Schneidstoffe zerstören würden. Damit aber kommen je nach Zustand der Räder eines zu reprofilierenden Radsatzes immer solche Schneidstoffe zum Einsatz, die für den zugeordneten Einsatzfall mindestens einen befriedigenden Spanbruch ergeben. Soweit Hochleistungsschneidstoffe zum Einsatz kommen, wird zusätzlich der Zeitbedarf für die Reprofilierung verkürzt. Somit wird besserer Spanbruch und höhere Wirtschaftlichkeit erreicht. Daher wird vorgeschlagen, daß als stoßunempfindliche Schneidstoffe übliche, beschichtete oder unbeschichtete Sinterhartmetalle verwendet werden, während als höhere Schnittgeschwindigkeit zulassende Schneidstoffe keramische Schneidstoffe auf Oxydbasis oder Nitridbasis oder polykristalline Diamanten verwendet werden.

Die Erfindung soll nun anhand der beigefügten Zeichnungen näher erläutert werden.

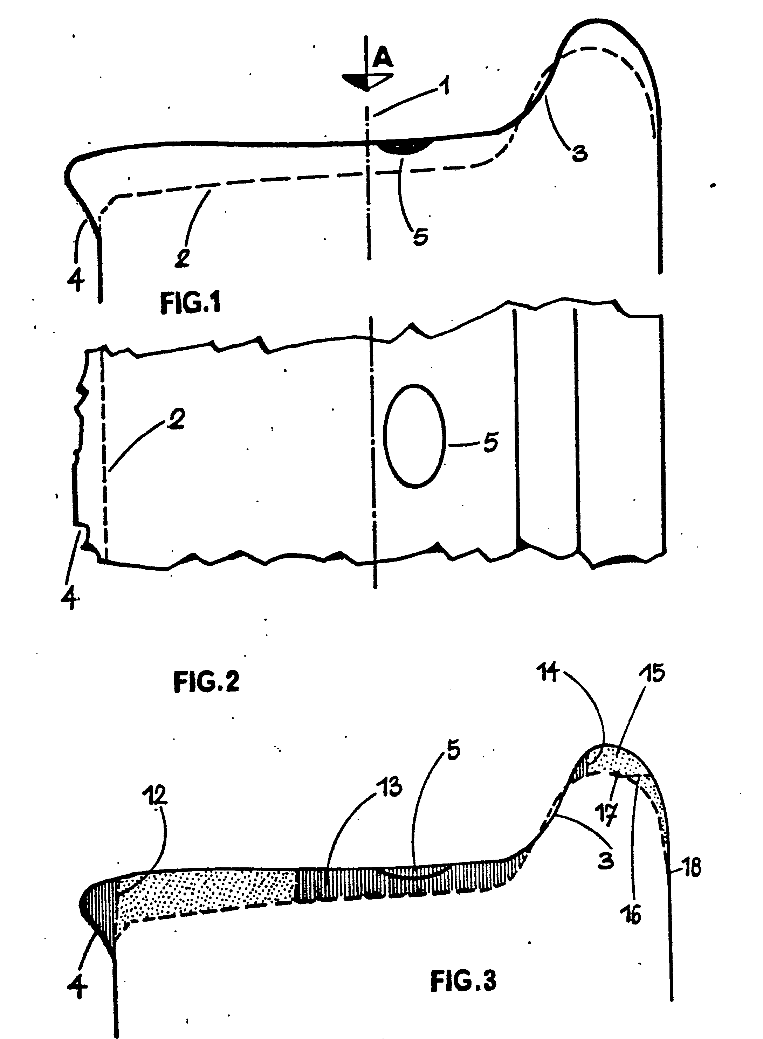

Es zeigen: Figur 1 einen Querschnitt durch einen Radreifen mit überwalzung und sog. schwarzer Stelle an der Lauffläche

Figur 2 Ansicht in Richtung des Pfeils A nach Figur 1

Figur 3 Ansicht wie Figur 1, jedoch mit Eintragung einer Schnittfolge nach dem erfindungsgemäßen Verfahren

Figur 4 Bearbeitungswerkzeug

Figur 5 Bearbeitungswerkzeug

Figur 6 Bearbeitungswerkzeug

Figur 7 Darstellung wie Figur 3 jedoch mit veränderter Schnittfolge

Figur 8 Schneidplatte für geringe Spantiefe
Figur 9 Schnitt I-I nach Figur 8
Figur 10 Schneidplatte nach Figur 8 in Arbeitsposition
Figur 11 Schneidplatte für einen Spantiefenbereich der sich an den Spantiefenbereich für eine Schneidplatte nach Figur 8 anschließt
Figur 12 Schnitt II-II nach Figur 11
Figur 13 Schneidplatte nach Figur 11 in Arbeitsposition
Figur 14 Schneidplatte für einen sich an den Arbeitsbereich der Schneidplatte nach Figur 11 anschließenden Spantiefenbereich
Figur 15 Schnitt III-III nach Figur 14
Figur 16 Schneidplatte nach Figur 14 in Arbeitsposition
Figur 17 Seitenansicht eines Kopiersupports
Figur 18 Ansicht in Richtung des Pfeils B nach Figur 17
Figur 19 Hydraulikschaltplan für einen Kopiersupport nach Figur 17

In Figur 1 ist mit der dick durchgezogenen Linie ein Verschleißprofil eines laufenden Radsatzes im Querschnitt dargestellt. Zur Erzeugung eines korrekten Profils muß dieses Verschleißprofil bis auf die Linie des gestrichelten Profils, das das Neuprofil 2 darstellt, zerspant werden. Um die Wiederherstellung des Neuprofils 2 mit möglichst geringer Zerspanung zu erreichen, wird in bekannter Weise nur soviel zerspant, daß dieses Neuprofil 2 am Verschleißprofil gerade so tangiert. Dieses Tangieren wird so knapp gehalten, daß eine sogen. schwarze Stelle 3 als Rest des Verschleißprofils noch übrig bleibt.

An der Außenkante des Verschleißprofils ist ein durch die häufige Überwalzung erzeugter Grad 4 mit gezacktem Rand, wie Figur 2 zeigt, vorhanden.

Die strichpunktierte Linie 1 stellt die Meßkreisebene dar, deren Lage zu jedem Profil festgelegt ist. In dieser Meßkreisebene wird die Durchmesserbestimmung eines Rades vorgenommen.

Im Bereich dieser Meßkreisebene 1 können Hartstellen 5 auftreten die -wie Figur 2 zeigt- in aller Regel örtlich sehr begrenzt sind. Der Hartstelle 5 könnte sich ebenfalls eine hier nicht näher dargestellte Flachstelle, beispielsweise durch Blockierbremsung entstanden, anschließen. Der Werstoff im Bereich einer solchen Flachstelle ist ebenfalls hart. Bei einer Flachstelle kommt jedoch als belastungserschwerend für Schneidwerkzeuge noch die plötzliche Formunregelmäßigkeit hinzu.

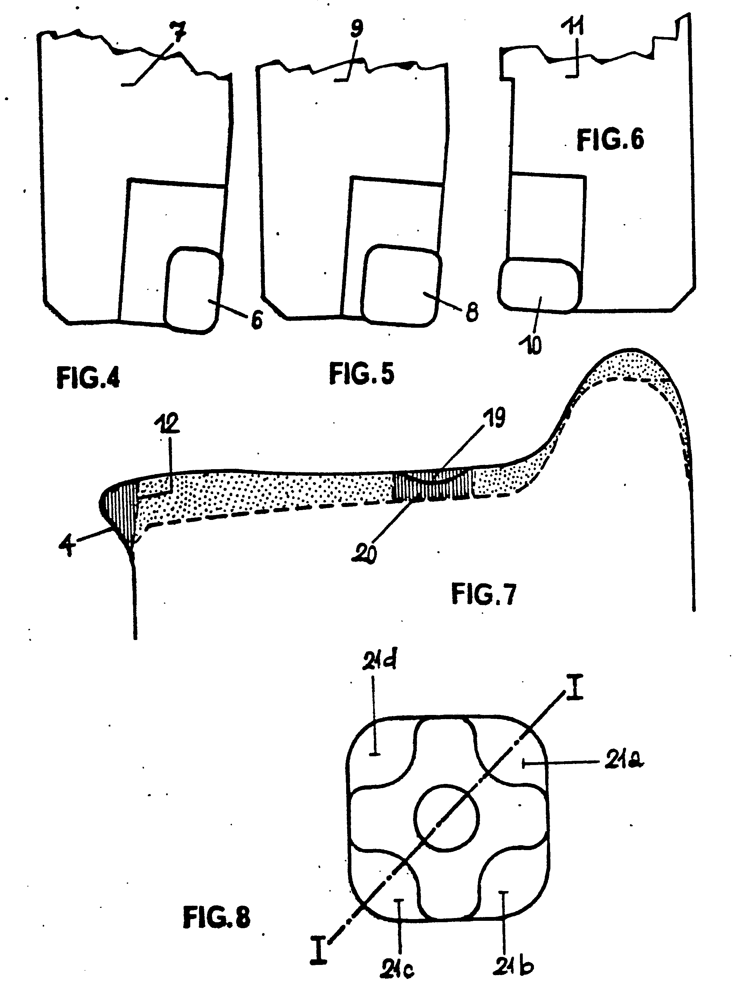

Zur Durchführung des erfindungsgemäßen Verfahrens muß nun das Gesamtprofil in solche Profilbereiche aufgeteilt werden, die einerseits von stoßunempfindlichen Schneidstoffen und andererseits von Hochleistungsschneidstoffen zerspant werden sollen. Dies ist, als Beispiel einer Aufteilung, in Figur 3 dargestellt. Die jeweils zur Anwendung gelangenden Werkzeuge sind in den Figuren 4 bis 6 dargestellt.

Bei einem Rad, dessen Profil in Figur 3 dargestellt ist, wird der Grat 4 mit der Werkzeugplatte 8 (Figur 5), die auf einem Halter 9 befestigt ist, zerspant. Die Werzeugplatte 8 besteht aus zähem Hartmetall, weil der Grat 4 hart ist, einen gezackten Rand aufweist (siehe Figur 2) und somit einen unterbrochenen Schnitt erzeugt. Der Schneidstoff ist daher einer Stoßbelastung unterworfen, so daß er stoßunempfindlich sein muß.

Der Schnitt mit der Werkzeugplatte 8 wird beendet, wenn die Schneidkante der Werkzeugplatte 8 an der Außenplanfläche 12 des nicht näher bezeichneten Rades angekommen ist. An dieser Stelle wird das Werkzeug gewechselt. Ebenso wird an dieser Stelle die Schnittgeschwindigkeit und der Vorschub gewechselt. Es kommt nunmehr für den in Richtung Spurkranz gesehen sich anschließenden Bereich (in Figur 3 punktiert dargestellt) die aus Oxydkeramik bestehende Schneidplatte 6 zum Einsatz, die auf einem Halter 7 befestigt ist (siehe Figur 4). Die Schneidplatte 6 muß natürlich nicht unbedingt aus Oxydkeramik bestehen, sondern sie kann auch aus anderen Hochleistungsschneidstoffen mit vergleichbaren Eigenschaften bestehen.

Der Schnitt mit der Schneidplatte 6 wird beendet, wenn die Schneidkante dieser Schneidplatte den Bereich 13 erreicht hat, in dem sich, z. B. erfahrungsgemäß, Hartstellen 5 befinden. In diesem Bereich 13 wird wieder die Schneidplatte 8 eingesetzt, die in der Lage ist, die an der Hartstelle 5 auftretende Stoßbelastung zu ertragen. Wegen der verbleibenden schwarzen Stelle 3 und der im Bereich der Spurkranzflanke möglicherweise vorhandenen Aufschweißungen und der hieraus resultierenden Stoßbelastungen für das Werkzeug muß der Schnitt mit der Schneidplatte 8 bis zum Bereich 14 des Profils geführt werden. In dem sich anschließenden Bereich 15 (in Figur 3 wiederum punktiert dargestellt), wird wieder die Oxydkeramikschneidplatte 6 zum Einsatz gebracht, da in diesem Bereich nur noch kaltverformter Werkstoff vorliegt. Allerdings wird es dennoch notwendig, auf die Linie 16 einen Werkzeugwechsel aufgrund der geometrischen Verhältnisse am Profil durchzuführen. Linie 16 ist Tangente an Punkt 17. Es wird hierzu die Schneidplatte 10, die auf dem Halter 11 angeordnet ist, verwendet. Diese Schneidplatte 10 kann wiederum ein Hochleistungsschneidstoff, wie z. B. Oxydkeramik, sein. Mit ihr kann bis zur Stelle 18 das Profil bearbeitet werden.

Die in Figur 3 beispielsweise vorgenommene Schnittaufteilung könnte grundsätzlich bei jedem verschlissenen Radsatz eingehalten werden. Es kämen dann im sinnvollen Wechsel Hochleistungsschneidstoffe und stoßunempfindliche Schneidstoffe zum Einsatz und es könnten durch die geeignete Anpassung der Schnittdaten überwiegend kurze Bruchspäne erzielt werden.

Bei veränderter Bearbeitung und vorheriger Prüfung des zu reprofilierenden Radsatzes ist eine optimierung der Schnittaufteilung möglich, wie sie beispielsweise für einen Einzelfall in Figur 7 dargestellt ist. Für eine solche Optimierung der Schnittaufteilung ist jedoch die Kenntnis des Zustandes des Radsatzes erforderlich. Zunächst sind Hartstellen zu ermitteln. Diese können beispielsweise festgestellt werden durch Anlegen eines Härtetesters auf Vibrationsbasis bei rotierendem Radsatz an die aus Erfahrung bekannten Stellen des Profils. Weiterhin muß das Vorhandensein von Grat festgestellt werden, was durch einfache Inaugenscheinnahme gelingt. Gleiches gilt für die Überprüfung auf das Vorhandensein von Schweißraupen. Auch muß das Vorhandensein und die Lage von sogen. schwarzen Stellen ermittelt werden, was beispielsweise auf einem bekannten optischen Meßstand erfolgen kann.

Bei der vorbeschriebenen Überprüfung soll sich ein Radzustand ergeben haben, wie er in Figur 7 dargestellt ist. Es ist sofort zu erkennen, daß der Grat 4 wiederum bis zum Bereich der Außenplanfläche 12 mit Hartmetallschneidstoffen zerspant werden muß. Der sich anschließende, gepunktet dargestellte Bereich kann nun mit Hochleistungsschneidstoffen, wie beispielsweise Oxydkeramik, überdreht werden. Dieser Bereich ist bis sehr nahe an eine Hartstelle 19 herangeführt, deren Bereich 20 nun wieder mit Hartmetallschneidstoff und den zuzuordnenden Schnittdaten zerspant werden muß. Nach Zerspanung des Bereichs 20 kann die restliche Zerspanung des Profils nach Figur 7 wieder mit Hochleistungsschneidstoff durchgeführt werden.

Hat sich bei der überprüfung ergeben, daß Bereiche die eine Stoßbelastung ausüben nicht vorhanden sind, so kann die gesamte Reprofilierung am jeweiligen Rad mit Hochleistungsschneidstoffen durchgeführt werden.

Hat sich hingegen ergeben, daß weit verteilt Bereiche die eine Stoßbelastung ausüben vorhanden sind, so kann die gesamte Reprofilierung am jeweiligen Rad mit stoßunempfindlichen Schneidstoffen, wie z. B. mit herkömmlichen Hartmetallen, durchgeführt werden.

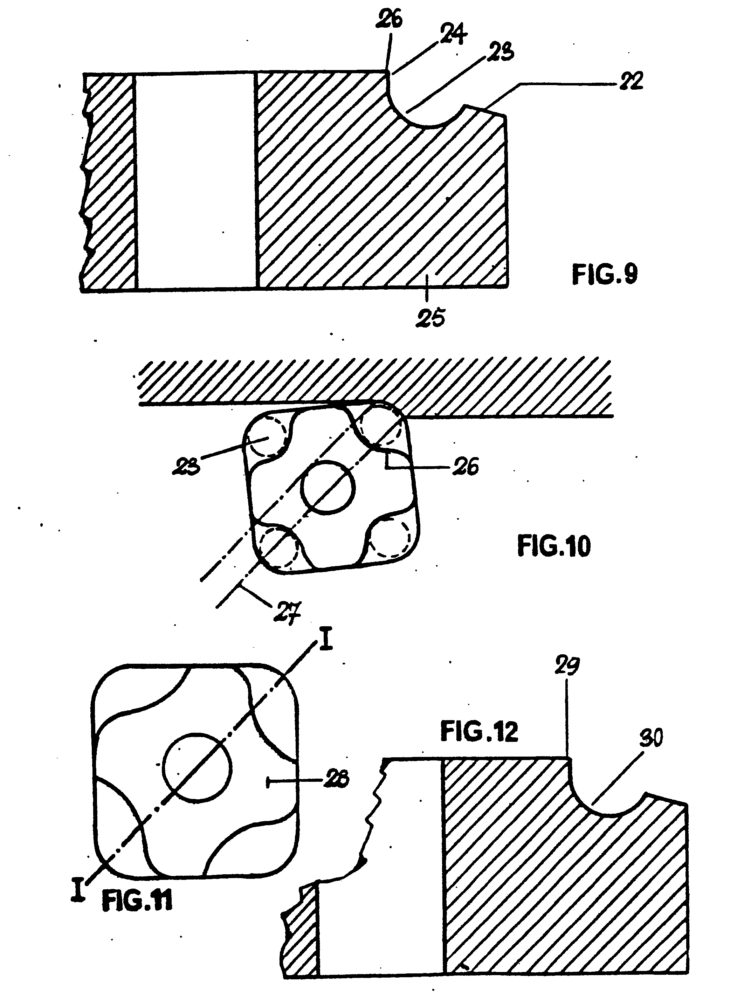

Es kann durchaus sinnvoll sein bei der Optimierung aller Arbeitsbedingungen, beispielsweise in Figur 7 für die Zerspanung des Grates 4 und für die Zerspanungsbearbeitung im Profilbereich 20 Hartmetallschneidplatten mit unterschiedlicher Schneidengeometrie zur Anpassung an den jeweiligen Arbeitsbereich zu verwenden. Gleiche Überlegungen gelten auch für die unterschiedlichen, von Hochleistungsschneidstoffen zu bearbeitenden Profilbereiche, die in Figur 7 punktiert dargestellt sind. Dies gilt auch für eine Schnittaufteilung nach dem Beispiel der Figur 3. Um unter allen Einsatzbedingungen kurzbrechende Späne zu erhalten, ist es erforderlich neben geeigneten Daten für die Schnittgeschwindigkeit und die Vorschubgeschwindigkeit auch eine geeignete geometrische Gestalt der jeweiligen Schneidplatte zu verwenden. Dies ist besonders wichtig für die Verwendung der stoßunempfindlichen Schneidstoffe. Das größte Problem hierbei ist, daß zwar genügend funktionssichere geometrische Gestaltungen solcher Schneidplatten bekannt sind, diese jedoch einen kurzen Bruchspan immer nur in einem bestimmten Bereich einer zu bearbeitenden Spantiefe ergeben. Da bei der Reprofilierung der Räder von Radsätzen dieser Spantiefenbereich in Profilrichtung starken Schwankungen unterworfen ist, treten ständig wechselnde Bedingungen für den Spanbruch auf. Daher ist es besonders sinnvoll den auftretenden Spantiefenbereich in mehrere kleinere Bereiche zu unterteilen, wobei diese kleineren Bereiche jeweils von einers speziellen Schneidplatte beherrscht werden können. Beispielsweise wird ein in der Meßkreisebene auftretender Spantiefenbereich von 8 mm in drei Bereiche unterteilt, nämlich 0-2 mm, 2-4 mm, 4-8 mm. Für jeden dieser Bereiche wird eine besondere Schneidplatte vorgesehen, die in der geometrischen Form gleich, jedoch in der Formgebung der Spanleitflächen und der Spanbrecherflächen dem Zweck entsprechend verschieden geformt sind. Für den Bereich von 0-2 mm kann beispielsweise eine Schneidplatte gemäß Figur 8, 9 und 10 vorgesehen werden. Diese Schneidplatte ist eine Quadratplatte mit vier Schneidkanten (21a, 21b, 21c, 21d), die wahlweise zum Einsatz gebracht werden können. Bei dieser Schneidplatte beginnt die Spanfläche mit einer schmalen Phase 22, geht über in eine Mulde 23, die in einer Steilwand 24 von einigen Millimetern Überhöhung endet. Die Unterseite 25 dieser Platte ist eben. Die Mulde 23 ist etwa kugelförmig um das Zentrum der Kantenabrundung herum angeordnet. Die Spanbrecherkante 26 paßt sich dem hinteren Rand der Mulde 23 an und geht rechtwinklig auf die Schneidkanten zu. Die strichpunktierten Linien (Figur 10) stellen den Spanablauf dar.

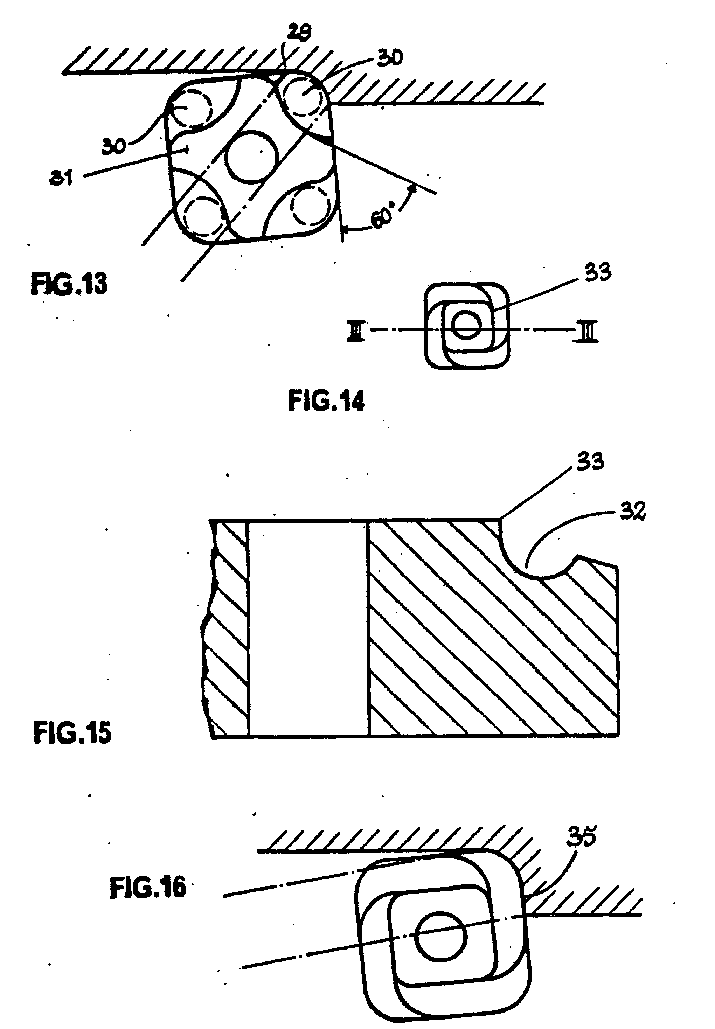

Für den Bereich 2-4 mm Spantiefe ist beispielsweise eine Hartmetallschneidplatte 28 (Figur 11) vorgesehen. Die geometrischen Verhältnisse sind die gleichen wie bei den Werkzeugen nach Figur 8-10, jedoch hat die Spanbrecherkante 29 einen anderen Verlauf. Die Spanbrecherkante 29 tangiert den Außenrand der Mulde 30 und läuft einerseits auf die Nebenschneide zu und läuft andererseits mit einem Bogen, dessen Radius größer ist als der Radius der Mulde 30, auf die Hauptschneide zu, so daß der Winkel zwischen Hauptschneide und Spanbrecherkante 29 ca. 60° beträgt. Es stellt sich ein Späneabfluß 31 ein, wie in Figur 13 dargestellt.

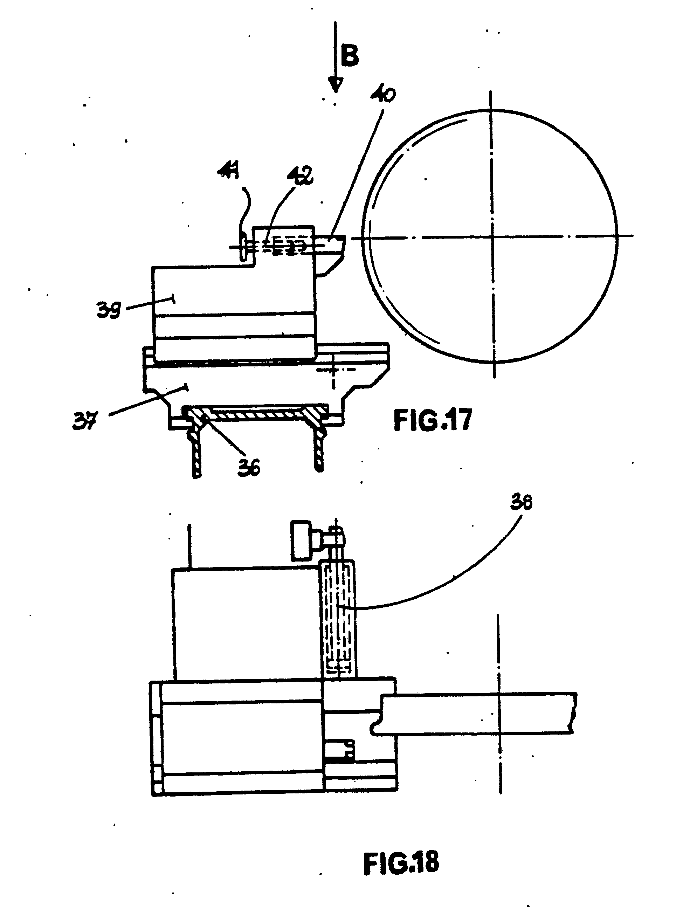

Eine Schneidplatte, wie sie in den Figuren 14 bis 16 dargestellt ist, wird eingesetzt bei Spantiefen bis zu 8 mm. Die geometrischen Verhältnisse sind wiederum die gleichen wie bei den Schneidplatten nach Figur 11 bis 13. Jedoch hat die Spanbrecherkante 33 und die Mulde 32 einen anderen Verlauf. Sie laufen parallel zur Kantenabrundung und zur Hauptschneide 35 und beginnen an der Schneidenrundung und enden etwa 2 mm hinter dem Bereich der maximalen Spantiefe. Es stellt sich dann ein Spänefluß 34 ein, wie in Figur 16 dargestellt.

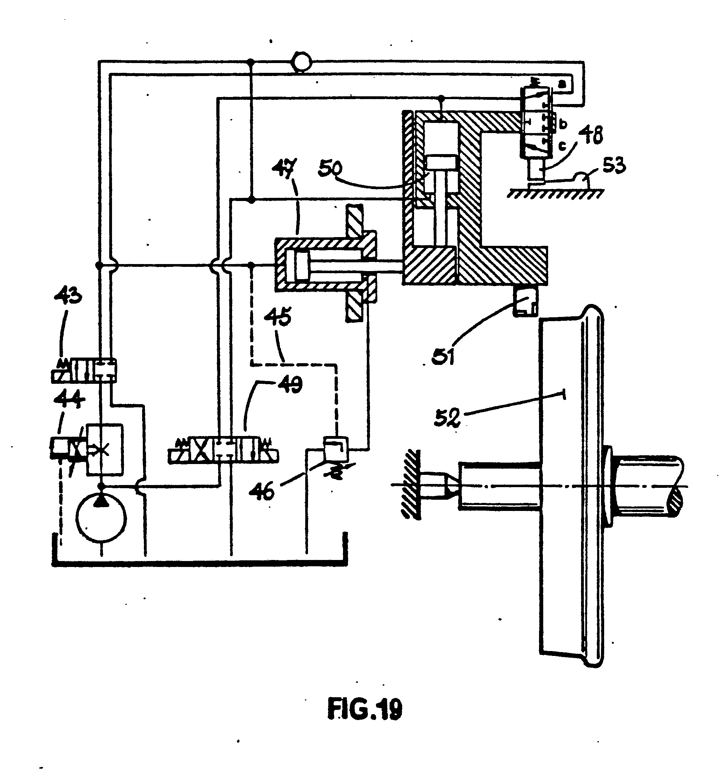

In den Figuren 17 und 18 ist der prinzipielle Aufbau eines für die gewünschte Reprofilierung geeigneten Supportes dargestellt. Auf den Längsführungen 36 eines nicht näher bezeichneten Maschinenbettes gleitet ein Längsschlitten 37, der über einen Zylinder 38 verschoben werden kann. Auf dem Längsschlitten 37 gleitet ein Planschlitten 39, auf welchem ein Werkzeugkopf 40 angeordnet ist. Werkzeugkopf 40 ist austauschbar befestigt. Es kann beispielsweise über das Handrad 41 mit der Spindel 42 der Werkzeugkopf 40 festgespannt werden. Der Werkzeugkopf 40 kann als handelsübliches Werkzeugsystem ausgebildet sein und es können hydraulische, elektrische oder mechanische Spanneinrichtungen zum Einsatz kommen. Das Auswechseln des Werkzeugkopfes 40 kann hierbei automatisch über einen Werkzeugwechsler oder einfach von Hand erfolgen. Ebenso ist es möglich den Werkzeugkopf oder einzelne Werkzeuge in einem Revolverkopf unterzubringen oder beispielsweise einen Teil der Werkzeuge fest auf dem Support zu installieren und einen anderen Teil auswechselbar zu befestigen. Ebenso kann der die Werkzeuge oder das Werkzeugsystem tragende Support nach Belieben hydraulisch, elektrisch oder numerisch gesteuert sein. Das Ausführungsbeispiel zeigt einen für den beabsichtigten Einsatz verwendbaren Support mit hydraulischer Kopiersteuerung. Der hierzugehörige Schaltplan ist in Figur 19 dargestellt. Über einen Kopierfühler 48 bekannter Bauart wird das Zusammenspiel zwischen Planzylinder und Längszylinder gesteuert. Der Vorschub wird eingeschaltet durch eine Schaltung des Ventils 43. Hierbei wird die Vorschubölmenge bestimmt durch das Stromventil 44. Der Fühler 48 befindet sich aufgrund des Federdruckes in Stellung a und das Öl strömt in den Raum 50 des Planzylinders, wodurch sich das Werkzeug 51 auf das Rad 52 zubewegt. Der Fühler 48 geht in die Stellung b wenn er auf die Schablone 53 trifft. Hierdurch nun baut sich in der Leitung 45 ein Druck auf, so daß sich das Vorspannventil 46 öffnet und hierdurch der Längszylinder 47 mit dem Längsvorschub beginnt. Der Fühler 48 wird durch diese Längsbewegung je nach Neigung des Profils der Schablone 53 in die Stellung a oder c gebracht. Durch den dadurch entstehenden Druckabfall in Leitung 45 wird die Bewegung des Längszylinders 47 durch das Schließen des Vorspannventils 46 gestoppt und der Raum 50 des Planzylinders wird mit Öl beaufschlagt.

Zur Durchführung eines Werkzeugwechsels wird über einen erneuten Schaltvorgang des Ventils 43, mit der dieses in die dargestellte Position geschaltet wird, der Vorschub ausgeschaltet. Sodann muß eine Umdrehung des Radsatzes abgewartet werden, damit die Werkzeugschneiden sich freischneiden können. Über eine entsprechende Schaltung des Ventils 49 wird der Planschlitten nunmehr für den Werkzeugwechsel zurückgezogen. Die umgekehrte Schaltung des Ventils 49 bringt das Werkzeug wieder in Arbeitsposition. Die Arbeitsposition wird hierbei geprüft durch den Fühler 48, so daß das Werkzeug in genau richtiger Stelle wieder in Eingriff kommt.

Mit dem erfindungsgemäßen Verfahren gelingt es erstmals Hochleistungsschneidstoffe bei der Reprofilierung von Rädern von Radsätzen sinnvoll einzusetzen und hierdurch einen verbesserten Spanbruch auch bei bisherigen Problembereichen sowie einen Zeitgewinn bei der Bearbeitung zu erzielen.

## Liste der verwendeten Bezugszeichen

1 Meßkreisebene
2 Neuprofil
3 schwarze Stelle
4 Grat
5 Hartstelle
6 Schneidplatte
7 Werkzeughalter
8 Schneidplatte
9 Werkzeughalter
10 Schneidplatte
11 Werkzeughalter
12 Außenplanfläche
13 Bereich
14 Bereich
15 Bereich
16 Linie
17 Punkt auf dem Profil
18 Punkt auf dem Profil
19 Hartstelle
20 Bereich
21 a Schneidkante
21 b Schneidkante
21 c Schneidkante
21 d Schneidkante
22 Fase
23 Mulde
24 Steilwand
25 Unterseite
26 Spanbrecherkante
27 Spanablauf
28 Hartmetallschneidplatte
29 Kante
30 Mulde
31 Späneabfluß
32 Mulde
33 Spanbrecherkante
34 Späneabfluß
35 Hauptschneide
36 Längsführung
37 Längsschlitten
38 Längszylinder
39 Planschlitten
40 Werkzeugkopf

41 Handrad
42 Spindel
43 Ventil
44 Stromventil
45 Leitung
46 Vorspannventil
47 Längszylinder
48 Fühler
49 Ventil
50 Planzylinderraum
51 Werkzeug
52 Rad
53 Schablone

**Patentansprüche**

1. Verfahren zum Reprofilieren von Profilen von Radsätzen durch eine Drehbearbeitung, dadurch gekennzeichnet, daß das Profil in wechselndem Einsatz von stoßunempfindlichen Schneidstoffen und solchen Schneidstoffen die eine für einen sicheren Spanbruch ausreichende Schnittgeschwindigkeit zulassen, unter Anpassung der Schnittdaten an den jeweils momentan verwendeten Schneidstoff überdreht wird, wobei der letztgenannte Schneidstoff in den Profilbereichen eingesetzt wird, die eine Stoßbelastung des Schneidstoffes nicht erwarten lassen, während in den übrigen Bereichen (13, 20) die stoßunempfindlichen Schneidstoffe eingesetzt werden.

2. Verfahren nach Anspruch 1, dadurch gekennzeichnet, daß das Vorhandensein von Stoßbelastungen auslösende Stellen (4, 5, 19) und deren Anordnung im Profilbereich vor oder während der Drehbearbeitung geprüft wird und in Abhängigkeit von diesem Prüfungsergebnis die Werkzeugzuordnung zu den unterschiedlichen Profilbereichen und die Auswahl und Einstellung der zuzuordnenden Schnittdaten erfolgt.

3. Verfahren nach Anspruch 1, dadurch gekennzeichnet, daß in den Profilbereichen (4, 13), in denen nach der Erfahrung mindestens häufig Stoßbelastungen auftreten, unabhängig vom tatsächlichen Zustand dieser Profilbereiche im Einzelfall, stets stoßunempfindliche Schneidstoffe eingesetzt werden, während in den übrigen Profilbereichen stets die die höheren Schnittgeschwindigkeiten zulassenden Schneidstoffe eingesetzt werden.

4. Verfahren nach mindestens einem der Ansprüche 1 bis 3, dadurch gekennzeichnet, daß in den unterschiedlichen Profilbereichen, die von den unterschiedlichen Schneidstoffen bearbeitet werden, die jeweils eingesetzte Schneidengeometrie und Spanleitstufe den Zerspanungsbedingungen des zu bearbeitenden Profilbereiches angepaßt sind.

5. Verfahren zum Reprofilieren von Profilen von Radsätzen durch eine Drehbearbeitung, dadurch gekennzeichnet, daß die Räder der Radsätze vor der Drehbearbeitung auf das Vorhandensein von die Drehwerkzeuge stoßartig belastenden Stellen durch Messen und/oder Inaugenscheinnahme geprüft werden, wobei das Ergebnis der Prüfung für eine nachfolgende Werkzeugauswahl derart verwendet wird, daß bei Vorhandensein von die Schneidwerkzeuge stoßartig belastenden Stellen das ganze Profil mit stoßunempfindlichen Schneidstoffen und bei nicht Vorhandensein solcher Stellen das ganze Profil mit den die höhere Schnittgeschwindigkeit zulassenden Schneidstoffen unter Anwendung der jeweils zuzuordnenden spezifischen Schnittdaten bearbeitet wird.

6. Verfahren nach mindestens einem der Ansprüche 1 bis 5, dadurch gekennzeichnet, daß als stoßunempfindliche Schneidstoffe übliche, beschichtete oder unbeschichtete Sinterhartmetalle verwendet werden, während als höhere Schnittgeschwindigkeit zulassende Schneidstoffe keramische Schneidstoffe auf Oxydbasis oder Nitridbasis oder polykristalline Diamanten verwendet werden.

**Claims**

1. Method of reprofiling profiles of wheelsets by a rotary machining operation, characterised in that the profile is turned down by the alternating use of shock-insensitive cutting material and such cutting material which permits a cutting speed sufficient to produce a proper chip fracture, matching the cutting data to the particular cutting material being used at any instant, wherein the latter cutting material is used in the profile zones where a shock load on the cutting material is not expected, while the shock-insensitive cutting material is used in the remaining zones (13, 20).

2. Method according to claim 1, characterised in that the presence of regions (4, 5, 19) triggering shock loads, and their positions on the profile, are investigated before or during the rotary machining operation, and the allocation of tools to the different profile zones and the choice and setting of the associated cutting data is effected in dependence on the results of the investigation.

3. Method according to claim 1, characterised in that, in the profile zones (4, 13) in which from experience it is known that shock loads occur frequently at least, then regardless of the actual condition of these profile zones in any particular case shock-insensitive cutting materials are always used, while the cutting materials permitting the higher cutting speeds are always used in the remaining profile zones.

4. Method according to at least one of claims 1 to 3, characterised in that in the different profile zones which are machined by the different cutting materials the particular cutting geometry and chip production step are matched to the cutting requirements of the profile zone to be machined.

5. Method of reprofiling profiles of wheelsets by a rotary machining operation, characterised in that the wheels of the wheelset are examined before the rotary machining operation by measuring means and/or by inspection for the presence of regions which would exert shock loads on the tools, wherein the results of the examination are used for a subsequent choice of tool in such a manner that, with the presence of regions which would exert shock loads on the cutting tool the whole profile is machined with shockinsensitive cutting material, and in the absence of such regions the whole profile is machined with cutting material permitting higher cutting speeds, in each case using the specific cutting data assigned to the respective cutting material.

6. Method according to at least one of claims 1 to 5, characterised in that conventional, coated or uncoated sintered hard metals are used as shockinsensitive cutting materials, while ceramic cutting materials having an oxide or nitride base, or polycrystalline diamonds, are used as cutting materials permitting higher cutting speeds.

## Revendications

1. Procédé pour reprofiler des profils de trains de roues par un usinage au tour, caractérisé en ce que l'on tourne le profil en reprise en mettant en oeuvre alternativement des matériaux de coupe insensibles au choc et des matériaux de coupe qui autorisent une vitesse de coupe suffisante pour une rupture sûre des copeaux, en adaptant les données de coupe au matériau de coupe respectivement employé à tout moment, étant précisé que l'on utilise le matériau de coupe nommé en dernier dans les zones du profil dans lesquelles on ne s'attend pas à une contrainte par choc du matériau de coupe, tandis que dans les autres zones (13, 20), on utilise les matériaux de coupe insensibles au choc.

2. Procédé selon la revendication 1, caractérisé en ce que l'on vérifie, avant ou au cours de l'usinage au tour, la présence d'emplacements (4, 5, 19) déclenchant des contraines par choc ainsi que leur disposition dans la zones du profil; et en ce que la correspondance entre l'outil et les différentes zones du profil ainisi que le choix et la définition des donnés de coupe associées se font en fonction du résultat de cet examen.

3. Procede selon la revendication 1, caractérisé en ce que dans les zones (4, 13) du profil dans lesquelles, d'après l'expérience, apparaissent au moins fréquemment des contraintes par choc, indépendamment de l'état effectif de ces zones de profil dans le cas particulier, on utilise toujours des matériaux de coupe insensibles au choc, tandis que dans les autres zones du profil, on utilise toujours les matériaux de coupe qui autorisent les vitesses de coupe plus élevées.

4. Procédé selon au moins l'une des revendications 1 à 3, caractérisé en ce que dans les différentes zones du profil qui sont usinées par les différents matériaux de coupe, les caractéristiques géométriques de coupe et le brise-copeaux respectivement utilisés sont adaptés aux conditions d'enlèvement de copeaux de la zone du profil à usiner.

5. Procédé pour reprofiler des profils de trains de roues par un usinage au tour, caractérisé en ce qu'avant l'usinage au tour, on examine les roues, par mesaure et/ou par inspection visuelle, pour déterminer s'il existe des emplacements créant des contraintes par choc pour les outils de tournage, le résultat de l'examen étant employé, pour un choix consécutif des outils, de façon telle qu'en cas d'existence d'emplacements qui créent des contraintes par choc pour les outils de coupe, un usine l'ensemble du profil avec des matériaux de coupe insensibles au choc, et qu'en cas d'absence de tels emplacements, on usine l'ensemble du profil avec les matériaux de coupe qui autorisent la vitesse de coupe plus élevée, avec utilisation des données de coupe spécifiques respectivement associées.

6. Procédé selon au moins l'une des revendications 1 à 5, caractérisé en ce que, comme matériaux de coupe insensibles au choc, on utilise das carbures frittés habituels, stratifiés, on non stratifiés, tandis que comme matériaux de coupe autorisant une vitesse de coupe plus élevée, on utilise des matériaux céramiques à base d'oxydes ou de nitrures ou des diamants polycristallins.

0 163 035

FIG.1

FIG.2

FIG.3

FIG.4   FIG.5   FIG.6

FIG.7

FIG.8

FIG.9

25

FIG.10

26

23

27

I

28

I FIG.11

FIG.12

29

30

FIG.13

FIG.14

FIG.15

FIG.16

**B**

40

41    42

39

37

36

**FIG.17**

38

**FIG.18**

**FIG.19**